# FASCICULE DE BREVET EUROPEEN

(11) **EP 1 452 763 B1**
(45) Date de publication et mention de la délivrance du brevet: **10.10.2007**
(21) Numéro de dépôt: 04290540.6
(22) Date de dépôt: 27.02.2004
(51) Int. Cl.: F16F 15/16

(54) **Poulie de découplage**
Entkupplungsriemenscheibe
Decoupling pulley

(30) Priorité: 28.02.2003 FR 0302479
(43) Date de publication de la demande: 01.09.2004
(73) Titulaire: Peugeot Citroën Automobiles, 78140 Velizy-Villacoublay (FR)
(72) Inventeur: Parpaite, Marc, 78510 Triel Sur Seine (FR)
(74) Mandataire: De Cuenca, Emmanuel Jaime

(56) Documents cités:
- DE-A- 2 425 797
- DE-A- 4 328 596
- FR-A- 1 559 465
- GB-A- 2 096 237
- PATENT ABSTRACTS OF JAPAN vol. 0144, no. 95 (M-1041), 29 octobre 1990 (1990-10-29) & JP 02 203023 A (TOCHIGI FUJI IND CO LTD), 13 août 1990 (1990-08-13)
- PATENT ABSTRACTS OF JAPAN vol. 0143, no. 88 (M-1014), 22 août 1990 (1990-08-22) & JP 02 146321 A (TOCHIGI FUJI IND CO LTD), 5 juin 1990 (1990-06-05)

## Description

La présente invention concerne une poulie de découplage destinée à transmettre un couple entre un arbre autour duquel est montée la poulie et une courroie de transmission elle-même montée autour de la poulie, ladite poulie comprenant un moyeu et une jante agencés entre eux pour délimiter une cavité dans laquelle est montée au moins un élément adapté pour filtrer les acyclismes de l'arbre en rotation.

Elle concerne plus particulièrement les poulies de ce type qui équipent les moteurs à combustion interne et, en particulier, celles qui sont montées en sortie de vilebrequin de moteur à combustion interne et qui sont adaptées pour transmettre le couple de sortie du moteur à un accessoire tel qu'une pompe par l'intermédiaire d'une courroie de transmission.

Un problème important actuellement rencontré dans l'entraînement d'accessoires équipant les moteurs thermiques est la difficulté de transmission de la puissance à la sortie du vilebrequin aux différents accessoires par l'intermédiaire de la courroie de transmission.

Cette difficulté provient essentiellement du fait que chaque moteur présente un comportement plus ou moins acyclique en fonction de la charge et du régime.

Ces acyclismes non filtrés provoquent des niveaux de tension dynamique importants qui provoquent des glissements entre les poulies et la courroie de façade, des battements dits de brin, des mouvements de galet tendeur importants et enfin, des claquements de courroie de transmission bruyants.

Ces effets « secondaires » limitent la durée de vie des éléments en particulier de la courroie de transmission et du galet tendeur.

Pour limiter en partie ces effets, une solution actuelle consiste à placer un élément de découplage en caoutchouc à l'intérieur de la poulie menante, c'est-à-dire celle montée à la sortie du vilebrequin, entre la jante extérieure et le moyeu. Cette solution permet de filtrer une partie des acyclismes du moteur dans la majeure partie des cycles de fonctionnement de celui-ci.

Par contre, les effets possibles évoqués ci-dessus peuvent toujours se produire au cours desdits cycles, et plus précisément, lors des variations de fonctionnement du ou des systèmes d'entraînement des accessoires. Ces variations peuvent avoir lieu lors du démarrage du moteur et/ou de sa mise en charge ou de la mise en charge des accessoires.

En outre, le découplage par le biais d'un élément caoutchouc conduit obligatoirement à des modes de résonance limitant son efficacité suivant les régimes du moteur. Ceci est d'autant plus avéré pour les groupes moto-propulseur équipés d'un double volant amortisseur. Il est alors nécessaire de placer une roue libre sur l'alternateur afin d'éviter les résonances entre le double volant amortisseur et la poulie accessoire de découplage. En l'absence de cette roue libre, des claquements de courroie peuvent être entendus par le conducteur du véhicule automobile au démarrage du moteur. De tels claquements peuvent s'avérer vraiment nuisibles.

Le but de l'invention est alors de limiter de manière plus importante les effets négatifs des tensions dynamiques générés par les dispositifs d'entraînement d'accessoires pour moteur à combustion interne ou par ceux du moteur.

Pour ce faire, l'invention a pour objet une poulie de découplage, destinée à transmettre le couple entre un arbre autour duquel est montée la poulie et une courroie de transmission elle-même montée autour de la poulie, ladite poulie comprenant un moyeu et une jante agencés entre eux pour délimiter une cavité dans laquelle est montée au moins un élément adapté pour filtrer les cyclismes de l'arbre en rotation, caractérisée en ce que le moyeu et la jante sont en outre agencés entre eux pour autoriser une rotation limitée entre le moyeu et la jante lors des cyclismes de l'arbre en rotation.

Selon un mode de réalisation préféré de l'invention, l'agencement réalisé entre la jante et le moyeu est tel que la jante est montée coaxiale au moyeu, la cavité est étanchéifiée par au moins un élément d'étanchéité dynamique et est remplie complètement d'un fluide incompressible et chacune des faces respectives de la jante et du moyeu en contact avec le fluide est pourvue d'une série de pâles qui s'étendent radialement dans le plan du moyeu (11) et de la jante (12).

Selon une première variante, les pâles sont droites et à effet dit standard.

Selon une autre variante, les pâles sont orientées à effet dit roue libre.

Avantageusement encore, la jante est la jante extérieure de forme adaptée pour entrainer la courroie de transmission.

Avantageusement, elle comprend un arrêt axial monté dans une gorge périphérique du moyeu de la poulie adapté pour maintenir l'agencement du moyeu par rapport à la jante.

Pour permettre le remplissage de la poulie, la jante et/ou le moyeu sont percés de deux trous diamétralement opposés et obturés.

Avantageusement encore, l'obturation des deux trous est réalisée par des bouchons de type vis/bouchon.

L'effet technique premier ainsi réalisé par la poulie selon L'invention est de réduire les tensions dynamiques quelles que soient les phases de fonctionnement de l'arbre en rotation sur lequel est montée la poulie et de(s) accessoire(s) entraîné(s) par la courroie de transmission montée autour de la poulie.

Lorsque l'arbre en rotation est le vilebrequin d'un moteur à combustion, les variations de couple moteur ou accessoire sont ainsi lissées par un glissement temporaire de la jante par rapport au moyeu ou, autrement dit, par un patinage de la jante par rapport au moyeu.

Ainsi, la poulie selon l'invention est agencée de telle manière qu'une rotation complète entre la jante extérieure et le moyeu est toujours possible une fois la poulie assemblée mais non montée autour de l'arbre.

Par contre, lors du fonctionnement normal de la poulie, c'est-à-dire lorsque l'arbre, tel que le vilebrequin d'un moteur, est en rotation selon un régime défini, le fluide circule entre les deux séries de pâles en vis-à-vis en exerçant un effort sur chaque série de pâles sans qu'il y ait une rotation du moyeu par rapport à la jante.

Lors des acyclismes du moteur, le fluide produit en quelque sorte un effet de visco-couplage entre les deux séries de pâles en vis à vis.

Les variations de couple de l'arbre en rotation, telles qu'une élévation brusque de celui-ci, sont alors lissées par cet effet de visco-couplage.

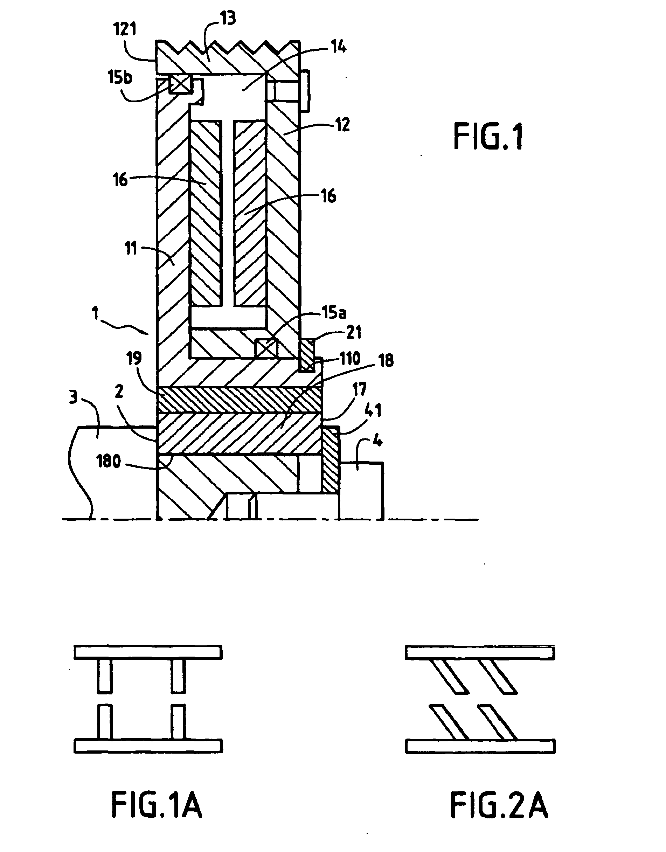

D'autres caractéristiques et avantages de l'invention ressortiront mieux à la lecture de la description détaillée d'un exemple de réalisation de l'invention faite en référence aux figures 1, 1a et 2a qui représentent respectivement :
- Figure 1: une vue en coupe axiale d'une poulie selon l'invention montée en bout de vilebrequin d'un moteur à combustion interne ;
- Figure 1a : une vue en coupe transversale d'une partie de la poulie selon la figure 1 dans laquelle les pâles de la poulie sont dites « droites » ;
- Figure 2a : une vue en coupe transversale d'une partie d'une autre poulie conforme à l'invention dans laquelle les pâles de la poulie sont dites orientées ;

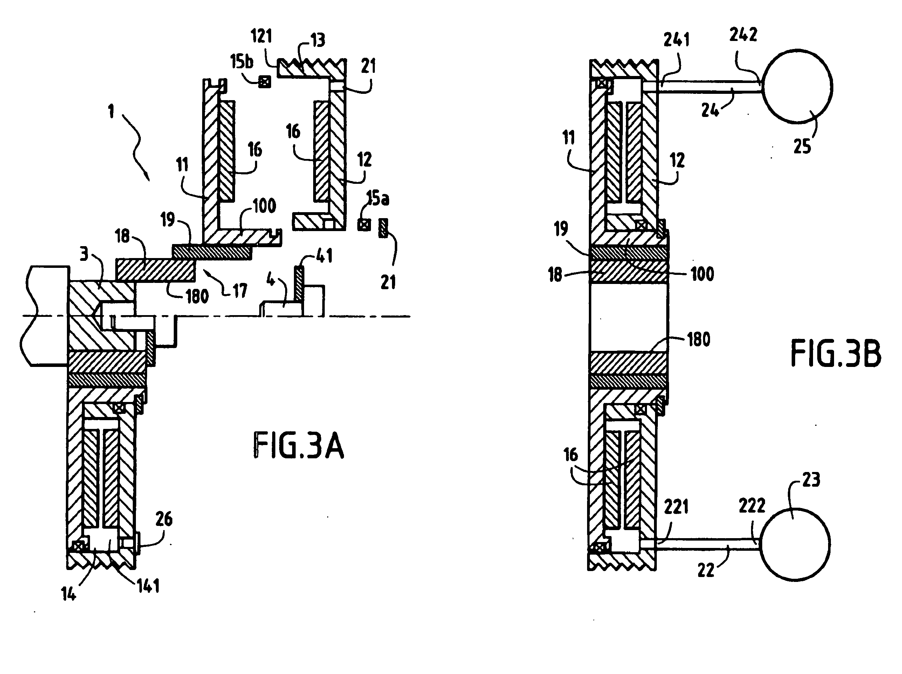

- Figure 3a : une vue éclatée de la poulie selon l'invention 1 ;
- Figure 3b : une vue schématique de la poulie selon l'invention 1 et du dispositif de remplissage associé.

Sur la figure 1 est représentée une poulie selon l'invention 1 emmanchée sur un épaulement 2 pratiqué à l'extrémité d'un vilebrequin 3 d'un moteur à combustion interne et maintenue en place par une vis 4 vissée en bout de vilebrequin et une rondelle 41.

Cette poulie 1 est constituée d'un moyeu 11 et d'une jante extérieure 12 pourvue à sa périphérie extérieure d'un ensemble de V 13 adapté pour entraîner une chaîne de transmission non représentée dite courroie en V.

L'agencement entre le moyeu 11 et la jante extérieure 12 est tel qu'ils délimitent une cavité 14 rendue étanche par l'intermédiaire de deux moyens d'étanchéité 15 dynamiques, c'est-à-dire dont la fonction d'étanchéité reste efficace lorsque le vilebrequin est en rotation.

Ces moyens d'étanchéité dynamique peuvent être des joints 15a, 15b.

La cavité 14 est remplie complètement d'un fluide 141 incompressible d'une viscosité définie et présente sur chacune des faces en regard respectivement du moyeu 11 et de la jante 12, une pâle 16 de section parallélépipédique tel que représente à la figure 1a. Dans ce mode de réalisation illustré, toutes les pâles 16 sont identiques entre elles. Les pâles 16 sont ici droites à effet dit standard.

Le maintien de la jante extérieure 12 sur la poulie 11 est assuré par un circlips 20 monté dans une gorge 110 pratiquée à la périphérie du moyeu.

Plus exactement également, la paroi extérieure 121 est dimensionnée pour affleurer dans le plan formé par le plan du moyeu, le joint 15b monté dans la paroi extérieure 111 du moyeu 11 permettant de réaliser l'étanchéité entre les deux éléments 11 et 12.

Le fonctionnement de la poulie 1 selon l'invention va maintenant être expliqué.

Lorsqu'une variation de couple du moteur à combustion interne se produit, c'est-à-dire lorsque le vilebrequin change de vitesse de rotation par exemple lors du démarrage du véhicule qui en est équipé, ou une variation d'un des accessoires équipant le moteur, le fluide qui remplit la cavité est comprimé et la jante extérieure effectue ainsi une rotation limitée, ici de l'ordre de quelques degrés, par rapport au moyeu. La puissance motrice du vilebrequin est tout de même transmise à la courroie par l'intermédiaire du fluide qui vient exercer une poussée sur la pâle équipant la face de la jante et une contre-poussée sur celle équipant la face du moyeu.

Cette rotation limitée, qui est en réalité un glissement temporaire entre la jante extérieure et le moyeu permet ainsi de réduire les tensions dynamiques qui s'exerce entre les différents éléments du moteur.

Un autre mode de réalisation de l'invention est représenté à la figure 2a sur laquelle on voit deux pâles orientées à effet dit roue-libre, c'est-à-dire.....**..** Cela signifie que lorsque le moteur resdescend en régime, il ne freine pas les accessoires aussi fortement qu'il doit les entrainer. On peut imaginer que lors d'un changement de rapport, la poulie glisse type roue-libre et que les accessoires restent au régime quelques secondes avnt que le moteur ne remonte en régime.

Bien entendu, il va de soi que différentes améliorations peuvent être envisagées sans pour autant sortir du cadre de l'invention.

Ainsi, la limitation de la rotation de jante par rapport au moyeu lors des acyclismes du moteur peut prendre différentes valeurs, en fonction de l'application envisagée.

De même, le nombre de pâles implantées respectivement sur la jante extérieure et le moyeu peut être plus important que celui décrit ci-dessus, en fonction par exemple de la puissance de l'arbre à transmettre.

En outre, l'inclinaison des pâles peut présenter un angle plus important.

L'écartement, la géométrie des pâles peut également être différente en fonction de l'application visée.

En outre, le profil de la périphérie de la jante peut prendre différentes formes pour s'adapter à différents types de courroie (ex : courroie à chevron, courroie trapézoïdale, ...)

Enfin, il est possible de choisir un fluide à viscosité adaptée. Par exemple, un fluide très visqueux permet d'obtenir un lissage moindre des acyclismes du couple moteur.

De même, pour effectuer le remplissage de la poulie, il est possible de l'immerger directement dans un bain de fluide incompressible 14, le remplissage s'effectuant alors naturellement.

L'invention permet avantageusement de supprimer la roue libre de l'alternateur pour les applications moteur dans lesquelles il existe un double volant amortisseur.

## Revendications

1. Poulie de découplage (1), destinée à transmettre un couple entre un arbre autour duquel est montée la poulie et une courroie de 5 transmission elle-même montée autour de la poulie, ladite poulie comprenant un moyeu (11) et une jante (12) agencés entre eux pour délimiter une cavité (14) dans laquelle est montée au moins un élément (14, 16) adapté pour filtrer les acyclismes de l'arbre en rotation, dans laquelle le moyeu et la jante sont agencés entre eux pour autoriser une rotation limitée de l'un par rapport à l'autre lors des acyclismes de l'arbre en rotation, l'agencement réalisé entre la jante et le moyeu étant tel que la jante est montée coaxiale au moyeu, la cavité est étanchéifiée par au moins un élément d'étanchéité dynamique (15a,15b) et est remplie complètement d'un fluide incompressible (14, 16) **caractérisé en ce que** chacune des faces respectives de la jante et du moyeu en contact avec le fluide est pourvue d'une série de pâles (16) qui s'étendent radialement dans le plan du moyeu (11) et de la jante (12).

2. Poulie selon la revendication 1, **caractérisée en ce que** les pâles sont droites et à effet dit standard.

3. Poulie selon la revendication 1, **caractérisée en ce que** les pâles sont orientées et à effet dit roue libre.

4. Poulie selon l'une quelconque des revendications précédentes, **caractérisée en ce que** le moyen (11) est collé à un élément (19) réalisé en matériau élastomère tel que le caoutchouc, lui-même collé à un moyeu vilebrequin (18).

5. Poulie selon l'une quelconque des revendications précédentes, **caractérisée en ce qu**'elle comprend un arrêt axial (21) monté dans une gorge périphérique (110) du moyen de la poulie adapté pour maintenir l'agencement du moyeu par rapport à la jante.

6. Poulie selon l'une quelconque des revendications précédentes, **caractérisée en ce que** la jante et/ou le moyeu sont percés de deux trous diamétralement opposés et obturés.

7. Poulie selon la revendication 7 **caractérisée en ce que** l'obturation des deux trous est réalisée par des bouchons de type vis/bouchons (26).

## Claims

1. Decoupling pulley (1) intended to transmit torque between a shaft around which the pulley is mounted and a transmission belt which is itself mounted around the pulley, the said pulley comprising a hub (11) and a rim (12) arranged with respect to each other to delimit a cavity (14) in which is mounted at least one element (14, 16) adapted to filter the acyclic operation of the rotating shaft, in which the hub and the rim are arranged with respect to each other to permit a limited rotation of one with respect to the other when acyclic operation of the rotating shaft occurs, the arrangement created between the rim and the hub being such that the rim is mounted coaxially with the hub and the cavity is sealed by at least one dynamic sealing element (15a, 15b) and is completely filled with an incompressible fluid (14, 16), **characterized in that** each of the corresponding faces of the rim and the hub in contact with the fluid is provided with a set of blades (16) which extend radially in the plane of the hub (11) and of the rim (12).

2. Pulley according to Claim 1, **characterized in that** the blades are set at right angles and have what is known as a standard action.

3. Pulley according to Claim 1, **characterized in that** the blades are orientated and have what is known as a free-wheel action.

4. Pulley according to any one of the preceding claims, **characterized in that** the hub (11) is bonded to an element (19) made from elastomeric material such as rubber, which is itself bonded to a crankshaft hub (18).

5. Pulley according to any one of the preceding claims, **characterized in that** it comprises an axial stop (21) mounted in a peripheral groove (110) of the pulley means adapted to maintain the arrangement of the hub with respect to the rim.

6. Pulley according to any one of the preceding claims, **characterized in that** the rim and/or the hub are pierced with two diametrically opposite stopped holes.

7. Pulley according to Claim 6, **characterized in that** the two holes are stopped by plugs of the screw plug type (26).

## Patentansprüche

1. Riemenscheibe zum Entkoppeln (1), die dazu dient, ein Drehmoment zwischen einer Welle, um die herum die Riemenscheibe montiert ist, und einem Transmissionsriemen zu übertragen, der selbst um die Riemenscheibe montiert ist, wobei die Riemenscheibe eine Nabe (11) und eine Felge (12) umfasst, die untereinander angeordnet sind, um einen Hohlraum (14) zu begrenzen, in dem mindestens ein Element (14, 16) montiert ist, das angepasst ist, um die Azyklizitäten der rotierenden Welle zu filtern, in der die Nabe und die Felge untereinander angeordnet sind, um eine begrenzte Rotation eines Teils im Verhältnis zum anderen bei den Azyklizitäten der rotierenden Welle zu gestatten, wobei die Anordnung, die zwischen der Felge und der Nabe realisiert wird, so ist, dass die Felge koaxial zur Nabe montiert ist, der Hohlraum durch mindestens ein dynamisches Dichtungselement (15a, 15b) abgedichtet ist und vollständig mit einem inkompressiblen Fluid (14, 16) gefüllt ist, **dadurch gekennzeichnet, dass** jede der jeweiligen Seiten der Felge und der Nabe, die mit dem Fluid in Kontakt sind, mit einer Reihe von Blättern (16) versehen ist, die sich auf der Ebene der Nabe (11) und der Felge (12) radial erstrecken.

2. Riemenscheibe nach Anspruch 1, **dadurch gekennzeichnet, dass** die Blätter gerade sind und eine so genannte Standardwirkung aufweisen.

3. Riemenscheibe nach Anspruch 1, **dadurch gekennzeichnet, dass** die Blätter mit einem so genannten Freilaufeffekt ausgerichtet sind.

4. Riemenscheibe nach irgendeinem der vorhergehenden Ansprüche, **dadurch gekennzeichnet, dass** die Nabe (11) an ein Element (19) geklebt ist, das aus einem Elastomermaterial realisiert ist, wie etwa Kautschuk, das selbst an eine Kurbelnabe (18) geklebt ist.

5. Riemenscheibe nach irgendeinem der vorhergehenden Ansprüche, **dadurch gekennzeichnet, dass** sie eine axiale Sperre (21) umfasst, die in einer Umlaufnut (110) der Nabe der Riemenscheibe montiert ist, die angepasst ist, um die Anordnung der Nabe im Verhältnis zur Felge zu erhalten.

6. Riemenscheibe nach irgendeinem der vorhergehenden Ansprüche, **dadurch gekennzeichnet, dass** die Felge und/oder die Nabe mit zwei Löchern (21) durchbohrt ist, die diametral entgegengesetzt und verschlossenen sind.

7. Riemenscheibe nach Anspruch 6, **dadurch gekennzeichnet, dass** das Verschließen der beiden Löcher durch Verschlüsse vom Typ Gewindeverschluss (26) realisiert wird.
